(19) Europäisches Patentamt
European Patent Office
Office européen des brevets

(11) **EP 2 766 135 B1**

(12) **EUROPÄISCHE PATENTSCHRIFT**

(45) Veröffentlichungstag und Bekanntmachung des Hinweises auf die Patenterteilung:
**06.12.2017 Patentblatt 2017/49**

(51) Int Cl.:
***B21J 15/02*** *(2006.01)*          ***B21J 15/28*** *(2006.01)*
***B21J 15/14*** *(2006.01)*

(21) Anmeldenummer: **12791079.2**

(22) Anmeldetag: **11.10.2012**

(86) Internationale Anmeldenummer:
**PCT/DE2012/000989**

(87) Internationale Veröffentlichungsnummer:
**WO 2013/053350 (18.04.2013 Gazette 2013/16)**

(54) **VORRICHTUNG UND VERFAHREN ZUR BEWERKSTELLIGUNG EINER MEHRZAHL VON NIETUNGEN ENTLANG DER OBERFLÄCHE EINES WERKSTÜCKES**

APPARATUS AND METHOD FOR REALIZING A PLURALITY OF RIVETED CONNECTIONS ALONG THE SURFACE OF A WORKPIECE

DISPOSITIF ET PROCÉDÉ PERMETTANT DE RÉALISER UNE PLURALITÉ DE RIVETAGES LE LONG DE LA SURFACE D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2011 DE 102011115819**

(43) Veröffentlichungstag der Anmeldung:
**20.08.2014 Patentblatt 2014/34**

(73) Patentinhaber: **Premium AEROTEC GmbH**
**86179 Augsburg (DE)**

(72) Erfinder:
• **SCHNEIDER, Michael**
**31275 Lehrte (DE)**
• **MORISSE, Jürgen**
**26969 Butjadingen (DE)**
• **HALBMEYER, Torsten**
**26122 Oldenburg (DE)**
• **EISENHAUER, Fredo**
**26969 Butjadingen (DE)**

(74) Vertreter: **Isarpatent et al**
**Patent- und Rechtsanwälte Behnisch Barth Charles**
**Hassa Peckmann & Partner mbB**
**Friedrichstrasse 31**
**80801 München (DE)**

(56) Entgegenhaltungen:
DE-C1- 3 535 761      US-A- 5 673 839
US-A- 6 154 279      US-A1- 2008 304 085

**Beschreibung**

Die vorliegende Erfindung betrifft eine Vorrichtung und ein Verfahren zur Bewerkstelligung einer Mehrzahl von Nietungen entlang der Oberfläche eines Werkstückes nach dem Oberbegriff des Anspruchs 1 bzw. 9.

Eine derartige Vorrichtung sowie ein derartiges Verfahren sind beispielsweise aus der gattungsgemässen DE 35 35 761 C1 bekannt. Darin wird ein Nietautomat mit rechnerunterstütztem Ansteuern von Nietpositionen auf einem Werkstück, insbesondere einem großflächigen gekrümmten Werkstück (z. B. "Rumpfspant"), beschrieben. Der bekannte Nietautomat umfasst:

- eine mittels Werkzeugsteuerdaten steuerbare Werkzeugeinrichtung zur Ausbildung von Bohrungen am Werkstück und zum Setzen von Nieten in den ausgebildeten Bohrungen, wobei es sich insbesondere auch um Senkkopfniete handeln kann,

- eine Steuereinrichtung bzw. einen Rechner zur Erzeugung der Werkzeugsteuerdaten für die Werkzeugeinrichtung, und

- eine optische Erfassungseinrichtung zur optischen Erfassung der Werkstückoberfläche und zur Bereitstellung von Erfassungsdaten.

Die Werkzeugeinrichtung umfasst hierbei zwei rechnerunterstützt verfahrbare Nietsysteme, nämlich jeweils ein Nietsystem auf jeder Seite des ebenfalls rechnergestützt verfahrbaren Werkstückes. Eines der beiden Nietsysteme weist einen Revolverkopf auf, an welchem fünf Bearbeitungsfunktionen realisiert sind: a) Bohren und Senken, b) Dichtmitteleinspritzen, c) Nietzuführen und Gegenhalten, d) Sonderfunktion wie z. B. Abtasten der Bohrungsgeometrie mit einer Kamera, und e) Beobachten der Funktionen a) bis d) mit einer Video-Kamera.

Das "Abtasten der Bohrungsgeometrie" mit einer Kamera dient bei dem bekannten Nietautomaten dazu, durch die Beobachtung der Oberfläche eines Muster-Werkstückes die Koordinaten von Bohrlöchern des Muster-Werkstückes zu ermitteln und in einem Rechner abzuspeichern, um diese Koordinaten bei einer späteren Durchführung des automatischen Nietverfahrens am eigentlichen, d. h. mit Nieten zu versehenden Werkstück zu nutzen.

Ein ähnlicher Nietautomat ist aus der DE 198 34 702 A1 bekannt. Diese bekannte Vorrichtung dient zum Herstellen eines tonnenförmigen Bauteils, wie z. B. eines Flugzeugrumpfes. Auch bei dieser Nietvorrichtung umfasst die Werkzeugeinrichtung koordiniert zusammenwirkende Nietsysteme beiderseits des zu bearbeitenden Werkstückes. Die Verwendung von Senkkopfnieten wie auch die Verwendung einer optischen Erfassungseinrichtung zur optischen Erfassung der Werkstückoberfläche sind in dieser Veröffentlichung jedoch nicht beschrieben.

Ganz allgemein ist es beim Setzen von Senkkopfnieten in vielen Anwendungsfällen von großer Bedeutung, dass die Senkung der zuvor ausgebildeten Senkbohrung möglichst exakt an die Geometrie des zu setzenden Senkkopfniets angepasst ist und/oder für die Erzielung einer gewünschten Lage des Senkkopfes des gesetzten Niets bezüglich der Werkstückoberfläche angepasst ist.

Wenn die Senkung beispielsweise eine zu kleine Senktiefe besitzt, so resultiert ein so genannter "Setzkopfüberstand" des nachfolgend gesetzten Niets, d. h. der Nietkopf ragt in einem gewissen Ausmaß aus der Werkstückoberfläche heraus. Umgekehrt, wenn die Senktiefe zu groß ist, so resultiert eine entsprechende Einbuchtung an der Werkstückoberfläche, was auch als Setzkopfunterstand bzw. "negativer Setzkopfüberstand" bezeichnet wird.

Beispielsweise bei Nietungen entlang der Außenfläche einer Rumpfschale eines Luftfahrzeuges würde ein übermäßiger Setzkopfüberstand die aerodynamischen Eigenschaften in der späteren Verwendungssituation der Rumpfschale erheblich beeinträchtigen. Ein allenfalls sehr kleiner oder besser gar kein Setzkopfüberstand ist in diesem Anwendungsfall ein sehr wichtiges Kriterium zur Beurteilung der Güte einer Nietverbindung. Die nachträgliche Reparatur von zu ungenau durchgeführten Nietungen führte bislang zu erheblichen Kostenaufwänden bei der Rumpfschalenmontage im Flugzeugbau.

Der (positive oder negative) Setzkopfüberstand wird in der Praxis, bei vorgegebener Formgestaltung des Nietkopfes und vorgegebenem "Senkungswinkel" der Senkung, maßgeblich von der mittels der Werkzeugeinrichtung realisierten Senktiefe der Senkbohrung bestimmt. Die Senktiefe ist bei automatischen Nietanlagen daher ein wichtiger Prozessparameter, der bei der programmgesteuerten Erzeugung der Werkzeugsteuerdaten zu berücksichtigen ist.

Gemäß einer internen betrieblichen Entwicklung der Anmelderin wird bei einer Nietvorrichtung der eingangs genannten Art die optische Erfassungseinrichtung (z. B. eine Kamera) zur Ermittlung derjenigen Positionen an der Oberfläche des Werkstückes verwendet, an denen so genannte "Heftniete" gesetzt sind. Diese Heftniete dienen dazu, im Rahmen des Nietverfahrens mit dem Werkstück zu vernietende Verstärkungsstrukturen (z. B. Stringer oder Spanten an der Innenseite einer Rumpfschale) bereits provisorisch am Werkstück anzubinden bzw. "anzuheften". Dieses Anheften kann z. B. manuell erfolgen. Beim Ablauf des automatischen Nietverfahrens werden dann mittels der optischen Erfassungseinrichtung die Positionen der Heftniete ermittelt. Diese Positionen können vorteilhaft als "Referenzpunkte" für die automatisch zu setzenden Senkkopfnieten in der programmierbaren Steuereinrichtung (z. B. NC-Steuereinheit) abgespeichert und bei der Erzeugung der Werkzeugsteuerdaten vorteilhaft verwendet werden. Beim automatischen Nietverfahren können die provisorischen Heftniete automatisch entfernt und durch Senkkopfnieten ersetzt werden (durch Aufbohren der Heftniete, Senken der Bohrung, und Setzen der Senkkopfniete).

Problematisch ist bei den bekannten Nietvorrichtungen der vorstehend beschriebenen Art die Erzielung einer gleichbleibenden und hohen Qualität der Nietungen, so dass nachträgliche Reparaturen vermieden werden können.

Es ist daher eine Aufgabe der vorliegenden Erfindung, bei der automatischen Bewerkstelligung einer Mehrzahl von Nietungen der eingangs genannten Art eine Möglichkeit zur Verbesserung der Qualität der Nietungen aufzuzeigen.

Diese Aufgabe wird gemäß der Erfindung durch eine Nietvorrichtung nach Anspruch 1 bzw. ein Nietverfahren nach Anspruch 5 gelöst. Die abhängigen Ansprüche betreffen vorteilhafte Weiterbildungen der Erfindung.

Bei der erfindungsgemäßen Nietvorrichtung ist die Steuereinrichtung dazu ausgebildet, eine Auswertung der von der optischen Erfassungseinrichtung gelieferten Erfassungsdaten vorzunehmen, um Geometriedaten zu gewinnen, die wenigstens einen Geometrieparameter einer bereits ausgebildeten Senkbohrung repräsentieren, und in Abhängigkeit vom Ergebnis einer Auswertung der gewonnenen Geometriedaten eine Korrektur der Werkzeugsteuerdaten für eine nachfolgend auszubildende Senkbohrung vorzunehmen.

Die tatsächlich ausgebildete Geometrie einer Senkbohrung ist wie oben bereits erläutert von großer Bedeutung hinsichtlich der Qualität der resultierenden Vernietung. Vorteilhaft wird eine unter Umständen ohnehin (zu anderen Zwecken) vorgesehene optische Erfassungseinrichtung, z. B. eine Kamera, im Rahmen der Erfindung dazu genutzt, wenigstens einen Geometrieparameter (z. B. Senkungsdurchmesser) einer bereits ausgebildeten Senkbohrung zu ermitteln.

Anhand einer nachfolgenden Auswertung der gewonnenen Geometriedaten kann z. B. in einfacher Weise festgestellt werden, ob die Geometrie der betreffenden Senkbohrung innerhalb eines vorgegebenen und beispielsweise in der Steuereinrichtung abgespeicherten Toleranzbereiches liegt oder nicht. Insofern kann ein in der Steuereinrichtung ablaufendes Steuerprogramm z. B. vorsehen, dass eine bereits ausgebildete Senkbohrung bzw. Senkung nochmals nachgebessert wird, bevor der Senkkopfniet in der Senkbohrung gesetzt wird. Dies ist im Rahmen der Erfindung durchaus denkbar.

Für die Erfindung wesentlich ist jedoch, dass in Abhängigkeit vom Ergebnis der Auswertung der gewonnenen Geometriedaten eine bedarfsweise Korrektur der Werkzeugsteuerdaten für (wenigstens) eine nachfolgend auszubildende Senkbohrung vorgenommen wird. Bei der "nachfolgend" auszubildenden Senkbohrung kann es sich insbesondere um die im Rahmen einer Bearbeitung eines bestimmten Werkstückes "unmittelbar nachfolgend" auszubildende Senkbohrung handeln. Die Erfindung trägt damit dem Umstand Rechnung, dass bei der Bewerkstelligung einer größeren Anzahl von Nietungen entlang der Oberfläche eines Werkstückes die Gefahr besteht, dass ein Geometrieparameter der Senkbohrung, wie z. B. insbesondere die Senktiefe, allmählich (von Nietung zu Nietung) aus einem betreffenden vorgegebenen Toleranzbereich "herauswandert". Mit der erfindungsgemäß vorgesehen Korrektur der Werkzeugsteuerdaten kann dies zuverlässig verhindert werden. Falls die Auswertung z. B. ergibt, dass der Wert der Senktiefe relativ nahe einer Untergrenze des zugehörigen Toleranzbereiches liegt, so kann durch eine entsprechende "Nachjustierung" der Werkzeugsteuerdaten vorteilhaft ein verbessertes Senkungsergebnis (hier: mit etwas größerer Senktiefe) für die nachfolgend auszubildende(n) Senkbohrung(en) erreicht werden.

In einer Ausführungsform ist die optische Erfassungseinrichtung eine Kamera zur Bereitstellung von Bilddaten. Dies besitzt z. B. den Vorteil, dass eine ohnehin (z. B. zu Überwachungszwecken und/oder zwecks "Heftnieterkennung") vorgesehene Kamera im Rahmen der Erfindung mitgenutzt werden kann, so dass hierdurch kein konstruktiver Mehraufwand entsteht. Alternativ zu einer Kamera kann auch ein anderes optisches Messsystem eingesetzt werden, solange dessen Messdaten zur Gewinnung von Geometriedaten ausgewertet werden können (z. B. Laserfeldsensoren etc.). Erfindungsgemäß ist der Geometrieparameter der Senkungsdurchmesser. In dem praktisch besonders häufigen Fall, dass die Senkbohrungen jeweils mit gut (exakt) definierten Werten von Bohrungsdurchmesser und Senkungswinkel ausgebildet werden, ist die Ermittlung des Senkungsdurchmessers äquivalent zur Ermittlung der Senktiefe der Senkbohrung. Jeder dieser beiden Geometrieparameter ist aus dem jeweils anderen Geometrieparameter berechenbar.

In einer Ausführungsform ist vorgesehen, dass die Auswertung der Erfassungsdaten dahingehend erfolgt, dass der Senkungsdurchmesser und unabhängig davon die Senktiefe ermittelt wird. Bei als bekannt vorausgesetztem Senkungswinkel sind diese Ermittlungen zwar redundant. Vorteilhaft kann jedoch diese Redundanz zur Erhöhung der Messgenauigkeit und/oder für eine Plausibilitätsüberprüfung der Messung genutzt werden. Erfindungsgemäß ist vorgesehen, dass die Steuereinrichtung dazu ausgebildet ist, basierend auf den Erfassungsdaten zunächst einen Senkungsdurchmesser der Senkbohrung zu ermitteln, um daraus unter Mitberücksichtigung eines Senkungswinkels der Senkbohrung sodann eine Senktiefe der Senkbohrung zu ermitteln.

In einer Ausführungsform ist vorgesehen, dass zur Auswertung der Geometriedaten der Wert wenigstens eines Ist-Geometrieparameters mit dem Wert eines entsprechenden vorgegebenen Soll-Geometrieparameters verglichen wird und die Korrektur der Werkzeugsteuerdaten basierend auf einem Ergebnis dieses Vergleiches vorgenommen wird.

In einer Ausführungsform wird ein in den Geometriedaten enthaltener Wert der Ist-Senktiefe mit einem Wert einer vorgegebenen Soll-Senktiefe verglichen. Basierend auf einer ermittelten Istwert/Sollwert-Abweichung können somit (z. B. für das Ausmaß dieser Abweichung charakteristische) Korrekturdaten in programmgesteuerter Weise von der Steuereinrichtung erzeugt werden, um mit diesen Korrekturdaten in der Steuereinrichtung gespeicherte Werkzeugsteuerdaten zu korrigieren bzw. zu "aktualisieren".

Wenngleich es bevorzugt ist, dass die Korrektur der Werkzeugsteuerdaten zumindest für eine Senktiefe der nachfolgend auszubildenden Senkbohrung vorgenommen wird, so soll im Rahmen der Erfindung keineswegs ausgeschlossen sein, in der beschriebenen Weise alternativ oder zusätzlich andere Geometrieparameter der Senkbohrung für die Korrektur heranzuziehen. Insbesondere kann alternativ oder zusätzlich zur Senktiefe z. B. der oben beschriebene Istwert/SollwertVergleich auch für den Senkungsdurchmesser angestellt werden.

Das im Anspruch 5 definierte erfindungsgemäße Verfahren zur Bewerkstelligung einer Mehrzahl von Nietungen entlang der Oberfläche eines Werkstückes insbesondere die Schritte:

- Ausbilden von Senkbohrungen am Werkstück und Setzen von Senkkopfnieten in den ausgebildeten Senkbohrungen, unter Verwendung einer mittels Werkzeugsteuerdaten gesteuerten Werkzeugeinrichtung,

- programmgesteuertes Erzeugen der Werkzeugsteuerdaten für die Werkzeugeinrichtung,

- optisches Erfassen der Werkstückoberfläche zur Bereitstellung von Erfassungsdaten (z. B. von einer Kamera bereitgestellte Bilddaten),

- Auswerten der Erfassungsdaten, um Geometriedaten zu gewinnen, die wenigstens einen Geometrieparameter (z. B. (wenigstens) eine Senktiefe und/oder (wenigstens) einen Senkungsdurchmesser) einer bereits ausgebildeten Senkbohrung repräsentieren,

- Auswerten der gewonnenen Geometriedaten, und

- Korrigieren der Werkzeugsteuerdaten für eine nachfolgend auszubildende Senkbohrung in Abhängigkeit vom Ergebnis der Auswertung der Geometriedaten (z. B. im Hinblick auf die Erzielung der gewünschten Senktiefe(n) bzw. den gewünschten Senkungsdurchmesser(n)).

Die Korrektur der Werkzeugsteuerdaten ist bevorzugt als geschlossener Regelkreis vorgesehen. Dies bevorzugt mit einer (hohen) "Regelfrequenz", bei welcher das Ergebnis der Auswertung der Geometriedaten für eine bestimmte Senkbohrung so rasch zu der gegebenenfalls erforderlichen Korrektur der Werkzeugsteuerdaten führt, dass die korrigierten bzw. aktualisierten Werkzeugsteuerdaten bereits bei der unmittelbar nachfolgenden Ausbildung der nächsten Senkbohrung berücksichtigt werden können.

Anstelle einer Korrektur lediglich auf Basis einer Auswertung derjenigen Geometriedaten, die für die zuletzt ausgebildete Senkbohrung gewonnen wurden, kommt auch in Betracht, die für mehrere Senkbohrungen bereitgestellten Erfassungsdaten und/oder gewonnenen Auswertungsergebnisse und/oder erzeugten Korrekturdaten, z. B. nach einer gewichteten Mittelwertbildung, für die Korrektur der Werkzeugsteuerdaten heranzuziehen.

Eine bevorzugte Verwendung einer Vorrichtung und/oder eines Verfahrens der vorstehend beschriebenen Art ist die Bewerkstelligung einer Mehrzahl von Nietverbindungen zwischen einem flächig ausgedehnten Bauteil und einem an einer Flachseite des Bauteils aufgesetzten langgestreckten Verstärkungselementes, insbesondere im Rahmen einer Herstellung einer verstärkten Rumpfschale eines Fahrzeuges, insbesondere Luftfahrzeuges.

Die Erfindung wird nachfolgend anhand von Ausführungsbeispielen mit Bezug auf die beigefügten Zeichnungen weiter beschrieben. Es stellen dar:

Fig. 1    eine schematische Darstellung einer automatischen Nietanlage gemäß eines Ausführungsbeispiels, mitsamt eines zu bearbeitenden Werkstückes,

Fig. 2    eine der Fig. 1 entsprechende Darstellung nach dem Ersetzen eines Heftniets durch einen Senkkopfniet,

Fig. 3    eine Darstellung zur Veranschaulichung der geometrischen Verhältnisse an einer Senkbohrung,

Fig. 4    ein mit einer Kamera der automatischen Nietanlage erfasstes Bild der Werkstückoberfläche, und

Fig. 5    ein Ablaufdiagramm des mit der Nietanlage durchgeführten Nietverfahrens.

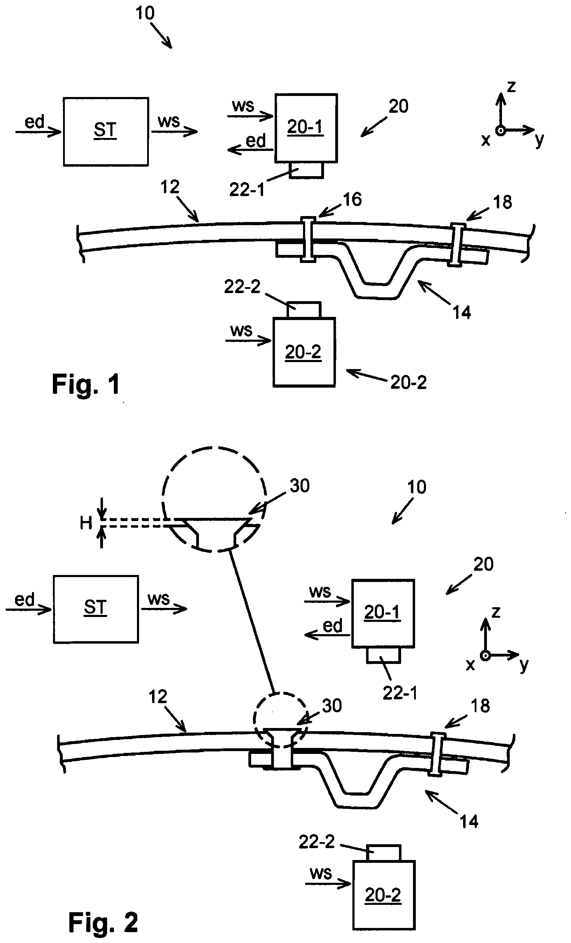

Fig. 1 zeigt eine automatische Nietanlage 10 zur Bewerkstelligung einer Mehrzahl von Nietungen entlang der Oberfläche eines Werkstückes.

Bei dem Werkstück handelt es sich im dargestellten Beispiel um eine Rumpfschale 12 eines Luftfahrzeuges, wobei die Nietungen zur Befestigung von Verstärkungsprofilen an der Innenseite der Rumpfschale 12 dienen. In Fig. 1 ist beispielhaft ein so genannter Stringer 14 eingezeichnet.

Der Stringer 14 ist in der in Fig. 1 dargestellten Situation provisorisch durch eine Reihe von Heftnietungen an der Rumpfschale 12 fixiert. In Fig. 1 beispielhaft dargestellt sind zwei Heftniete 16 und 18, die zuvor beispielsweise manuell gesetzt wurden.

Die Nietanlage 10 umfasst eine mittels Werkzeugsteuerdaten "ws" steuerbare Werkzeugeinrichtung 20, die ein erstes Werkzeugsystem 20-1 und ein zweites Werkzeugsystem 20-2 umfasst.

Die Werkzeugsysteme 20-1 und 20-2 sind auf jeweils einer Seite des zu bearbeitenden Werkstückes (hier: Rumpfschale 12 mit Stringer(n) 14) angeordnet und können in zueinander koordinierter Weise mittels der Werkzeugsteuerdaten "ws" angesteuert werden, um die gewünschten Nietungen zu bewerkstelligen.

Jedes der Werkzeugsysteme 20-1 und 20-2 kann mittels der Werkzeugsteuerdaten "ws" beispielsweise in wenigstens einer der drei Raumrichtungen x, y und z verfahrbar sein, wobei sowohl geradlinige als auch gekrümmte Verfahrwege denkbar sind, die durch geeignete (nicht dargestellte) Führungseinrichtungen realisiert sein können. Alternativ oder zusätzlich zu dieser Verfahrbarkeit der Werkzeugsysteme 20-1 und 20-2 kann auch eine Verschwenkbarkeit wenigstens eines der Systeme 20-1 und 20-2, um wenigstens einen Winkel, vorgesehen sein.

Unabhängig davon kann auch eine verfahrbare und/oder verschwenkbare Lagerung des Werkstückes, hier der Rumpfschale 12, vorgesehen sein.

Es kann vorteilhaft auf an sich bekannte Verfahr- bzw. Verschwenkkonstruktionen zurückgegriffen werden, wie diese z. B. in den eingangs zitierten Dokumenten zum Stand der Technik beschrieben sind. Letztlich kommt es lediglich darauf an, dass die beiden Werkzeugsysteme 20-1 und 20-2 in einer dem jeweiligen Anwendungsfall angepassten Weise bezüglich des betreffenden Werkstückes positioniert werden können, um als "Nietwerkzeug" fungieren zu können.

Die eigentliche Bearbeitung des aus Rumpfschale 12 und Stringer(n) 14 gebildeten Werkstückes erfolgt mittels dem Werkstück zugewandten Werkzeugköpfen 22-1 und 22-2 der beiden Werkzeugsysteme 20-1 und 20-2.

Die Werkzeugköpfe 22-1 und 22-2 können jeweils z. B. eine Anordnung von nebeneinander liegenden Einzelwerkzeugen oder z. B. auch eine Revolveranordnung derartiger Einzelwerkzeuge aufweisen.

Die Werkzeugeinrichtung 20 dient zur Ausbildung von Senkbohrungen am Werkstück 12 und zum Setzen von Senkkopfnieten in den ausgebildeten Senkbohrungen.

Die Nietanlage 10 umfasst ferner eine programmierbare Steuereinrichtung ST zur Erzeugung der benötigten Werkzeugsteuerdaten "ws", welche zur Ansteuerung der Werkzeugsysteme 20-1 und 20-2 an die Werkzeugeinrichtung 20 übermittelt werden.

Der Werkzeugkopf 22-1 des Werkzeugsystems 20-1 umfasst im dargestellten Beispiel insbesondere (wenigstens) einen so genannten "Bohrsenker", oder alternativ einen Bohrer und einen Senker, um die Ausbildung der am Werkstück benötigten Senkbohrungen zu bewerkstelligen. Des Weiteren umfasst der Werkzeugkopf 22-1 ein Werkzeug zum Setzen von Senkkopfnieten (in die jeweils zuvor ausgebildeten Senkbohrungen), also zum "Nietzuführen" und "Gegenhalten".

Der auf der anderen Seite des Werkstückes 12 beim Setzen eines Niets zum Einsatz kommende Werkzeugkopf 22-2 umfasst insbesondere einen so genannten "Döpper" zum Verquetschen des auf der dem "Setzkopf" (hier: Senkkopf) abgewandten Seite des Niets befindlichen "Schließkopfes" des betreffenden Niets.

Seitens des ersten Werkzeugsystems 20-1, beispielsweise als eine der Komponenten des Werkzeugkopfes 22-1, ist ferner eine optische Erfassungseinrichtung zur optischen Erfassung der Werkstückoberfläche und zur Bereitstellung entsprechender Erfassungsdaten "ed" vorgesehen.

Mittels dieser optischen Erfassungseinrichtung, beispielsweise einer Videokamera, werden im beschriebenen Beispiel zunächst diejenigen Positionen an der Oberfläche des Werkstückes 12 ermittelt, an denen die genannten Heftniete, also z. B. die in Fig. 1 dargestellten Heftniete 16, 18 angeordnet sind. Diese Ermittlung erfolgt durch eine geeignete programmgesteuerte Auswertung der Erfassungsdaten (hier: Bilddaten) der optischen Erfassungseinrichtung. Die Auswertung erfolgt auf Basis eines geeigneten Auswertealgorithmus, der in der Steuereinrichtung ST abläuft, welcher zu diesem Zweck die Erfassungsdaten "ed" zugeführt werden.

Eine in der Steuereinrichtung ST zwecks Erzeugung der Werkzeugsteuerdaten "ws" ablaufende Steuersoftware benutzt die zuvor ermittelten Positionen der Heftniete bei der späteren Durchführung des Nietverfahrens vorteilhaft als "Referenzpunkte" für die automatisch zu setzenden Senkkopfniete.

Im Verlauf des automatischen Nietverfahrens werden die Heftniete unter Benutzung der Werkzeugeinrichtung 20 entfernt und durch Senkkopfniete an der jeweils selben Stelle ersetzt. Dies geschieht im dargestellten Beispiel durch ein Aufbohren der Heftniete, darauffolgendes Bohrsenken einer letztendlich geeigneten Senkbohrung, und schließlich einem Setzen, d.h. Zuführen und Verquetschen eines passenden Senkkopfniets.

Fig. 2 veranschaulicht eine Situation, in welcher mittels der Nietanlage 10 der Heftniet 16 bereits durch einen Senkkopfniet 30 ersetzt wurde. Im weiteren Verlauf des Nietverfahrens wird insbesondere noch der Heftniet 18 entfernt und durch einen Senkkopfniet ersetzt. Außerdem werden eine Mehrzahl weiterer Senkkopfniete in automatischer Weise gesetzt, beispielsweise auf Verbindungslinien zwischen den Positionen der ursprünglich gesetzten Heftniete (Derartige Positionen auf den Verbindungslinien, wie auch die Verbindungslinien selbst, können vorteilhaft aus den als Referenzpunkte dienenden und zuvor abgespeicherten Heftnietpositionen berechnet werden).

Die in Fig. 2 enthaltene vergrößerte Detaildarstellung veranschaulicht das prinzipielle Problem, dass je nach Genauigkeit der Funktion der Werkzeugeinrichtung 20 ein unerwünschter "Setzkopfüberstand" H am bereits gesetzten Niet 30 vorhanden sein kann.

Wenngleich durch Berücksichtigung der Geometrie bzw. Konstruktion des zu vernietenden Werkstückes durch das dementsprechend ablaufende Steuerprogramm (zur Erzeugung der Steuerdaten "ws") im Idealfall kein unerwünschter Setzkopfüberstand resultieren dürfte, so ist zu bedenken, dass aufgrund von gewissen Toleranzen dieser Idealfall in der Praxis schwierig zu erreichen ist.

Die erfindungsgemäße Ausgestaltung zielt darauf ab, bei der Bewerkstelligung einer Reihe von derartigen Nietungen (vgl. Niet 30 in Fig. 2) entlang der Oberfläche des Werkstückes 12 eine hohe und gleichbleibende Qualität der Nietungen zu ermöglichen, wobei im dargestellten Beispiel insbesondere der Setzkopfüberstand H zuverlässig innerhalb eines kleinen vorgegebenen Toleranzbereiches gehalten werden soll, um durch einen zu großen oder zu kleinen (negativen) Setzkopfüberstand bedingte spätere Reparaturen zu vermeiden.

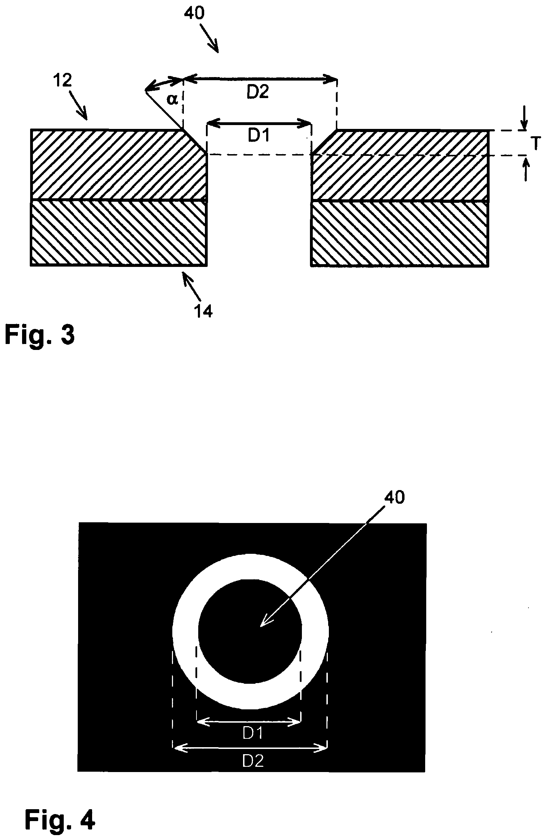

Zu diesem Zweck ist die Steuereinrichtung ST bzw. die darin ablaufende Steuersoftware dazu ausgebildet, eine Auswertung der Erfassungsdaten "ed" vorzunehmen, um Geometriedaten zu gewinnen, die wenigstens einen Geometrieparameter (vgl. Fig. 3), einer bereits ausgebildeten Senkbohrung repräsentieren. Sodann werden die gewonnenen Geometriedaten von der Steuereinrichtung ST ausgewertet. In Abhängigkeit vom Ergebnis der Auswertung werden sodann bedarfsweise Korrekturdaten erzeugt und für eine Korrektur der Werkzeugsteuerdaten "ws" für eine nachfolgend auszubildende Senkbohrung verwendet. Diese Besonderheit der Nietanlage 10 bzw. des damit durchgeführten Verfahrens seien nachfolgend anhand der Fig. 3 bis 5 nochmals näher erläutert.

Fig. 3 veranschaulicht die Geometrie einer Senkbohrung 40 am Werkstück 12. Daraus sind folgende Geometrieparameter ersichtlich:

D1: Bohrungsdurchmesser ("Innendurchmesser" der Senkbohrung 40)
D2: Senkungsdurchmesser ("Außendurchmesser" der Senkbohrung 40)
$\alpha$: Senkungswinkel der Senkbohrung 40
T: Senktiefe der Senkbohrung 40.

Es ist leicht nachvollziehbar, dass für die so definierten Geometrieparameter folgender Zusammenhang gilt:

$$(D2 - D1) / 2 = T * \tan(\alpha)$$

Insbesondere wenn die Senkbohrung 40 mittels eines Bohrsenkers ausgebildet wird, so sind die Werte von D1 und $\alpha$ relativ genau vorgegeben. Die Bekanntheit von D1 und $\alpha$ vorausgesetzt, kann somit nach einer auf Basis der optischen Erfassungsdaten "ed" erfolgenden Ermittlung von D2 (und/oder z. B. der Differenz D2 - D1) in einfacher Weise die Senktiefe T berechnet werden.

Im beschriebenen Beispiel besteht das Ziel darin, bei der Ausbildung von Senkbohrungen 40 insbesondere auch für die Werte von T bzw. D2 eine hohe und anhaltende Genauigkeit (im Hinblick auf die Mehrzahl an durchzuführenden Nietungen) zu erreichen.

Bei dem dargestellten Ausführungsbeispiel liefert die Kamera (optische Erfassungseinrichtung der Nietanlage 10) Bilddaten von der Oberfläche des Werkstückes 12.

Fig. 4 zeigt beispielhaft ein solches "Bild" der Werkstückoberfläche im Bereich einer bereits ausgebildeten Senkbohrung 40.

Die entsprechenden Bilddaten "ed" werden mittels eines in der Steuereinrichtung ST ablaufenden Auswertealgorithmus zur Ermittlung des Wertes von einem oder mehrerer Geometrieparametern ausgewertet. Im Folgenden sei angenommen, dass z. B. der Wert des Senkungsdurchmessers D2 durch diese Auswertung ermittelt wird und in die so gewonnenen Geometriedaten eingeht.

Der Bohrungsdurchmesser D1 und der Senkungswinkel $\alpha$ sind der Steuereinrichtung ST bekannt, da die Steuerung der Werkzeugeinrichtung 20 insbesondere auch die Auswahl eines bestimmten Bohrsenkers (bzw. alternativ einer bestimmten Kombination von Bohrer und Senker) umfasst, falls die Werkzeugeinrichtung 20 über mehrere verschiedene solcher Werkzeuge verfügt.

In Verbindung mit den bekannten Werten für den Bohrungsdurchmesser D1 und den Senkungswinkel $\alpha$ wird sodann von der Steuereinrichtung ST die Senktiefe T der Senkbohrung 40 berechnet und mit einem vorgegebenen Wert einer Soll-Senktiefe T0 verglichen (Dieser Sollwert T0 kann in der Steuereinrichtung abgespeichert sein). Dieser Vergleich dient zur Gewinnung von Korrekturdaten, welche z. B. repräsentativ für eine Istwert/Sollwert-Differenz T-T0 sind. Das Ergebnis dieser Auswertung der Geometriedaten, hier also z. B. die Differenz T-T0, wird sodann dazu verwendet, eine Korrektur der Werkzeugsteuerdaten "ws" für eine nachfolgend auszubildende Senkbohrung vorzunehmen.

Wenn also z. B. die zuvor "vermessene" Senkbohrung 40 eine tatsächliche Senktiefe T besitzt, die größer als die für diese Senkbohrung 40 vorgegebene Soll-Senktiefe T0 ist, so kann durch die Korrektur bzw. Aktualisierung der Werkzeugsteuerdaten "ws" bereits für die nächste auszubildende Senkbohrung eine verbesserte Qualität hinsichtlich der Senktiefe erreicht werden.

Damit kann ein "geschlossener Regelkreis" realisiert werden, so dass - bevorzugt während der Bearbeitung ein und desselben Werkstückes 12 - eine fortlaufende Überwachung und bedarfsweise Korrektur der Werkzeugsteuerdaten "ws" erfolgt.

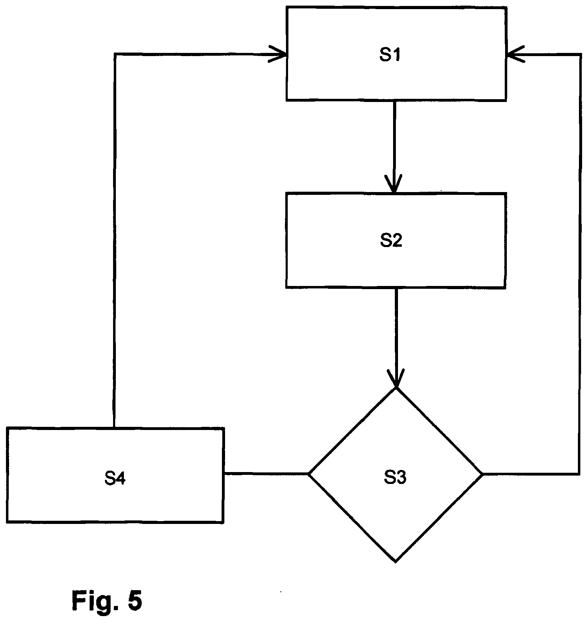

Fig. 5 zeigt nochmals ein Ablaufdiagramm der wesentlichen Schritte des beschriebenen Nietverfahrens.

Der Prozess beginnt mit einem Schritt S1, in welchem gemäß des Steuerprogramms an einer bestimmten Stelle des Werkstückes 12 eine Senkbohrung ausgebildet wird.

In einem Schritt S2 werden mittels der optischen Erfassungseinrichtung, z. B. Kamera, Erfassungsdaten (z. B. Bilddaten) bereitgestellt und ausgewertet, um Geometriedaten enthaltend den Wert wenigstens eines Geometrieparameters, hier z. B. der Senktiefe T, zu erhalten.

In einem Schritt S3 wird diese Senktiefe T mit dem entsprechenden Sollwert T0 verglichen und entschieden, ob eine Korrektur der Werkzeugsteuerdaten "ws" erforderlich ist. Falls dies nicht der Fall ist, so werden die Werkzeugsteuerdaten "ws" in dieser Hinsicht nicht verändert und nach einem Anfahren der Position einer gemäß Programmablauf als nächstes auszubildenden Senkbohrung schreitet die Verarbeitung wieder zum Schritt S1. Andernfalls, wenn also eine Korrektur angezeigt ist, so schreitet die Verarbeitung zu einem Schritt S4, in welchem der oder die betreffenden Steuerparameter in den Werkzeugsteuerdaten "ws" geeignet angepasst werden. Im vorliegenden Beispiel erfolgt an dieser Stelle also eine Korrektur desjenigen Steuerparameters, welcher maßgeblich für die auszubildende Senktiefe T ist. Erst dann schreitet die Verarbeitung wieder zum Schritt S1, so dass die durchgeführte Korrektur vorteilhaft für die Ausbildung der im Gesamtablauf noch auszubildenden weiteren Senkbohrungen berücksichtigt wird.

Wenngleich die Erfindung anhand eines speziellen Ausführungsbeispiels beschrieben wurde, so können Details in vielfältiger Weise modifiziert werden. Insbesondere kann die Erfindung sowohl für einteilige als auch mehrteilige Niete (z. B. so genannte Passniete) eingesetzt werden. Wenngleich die Senkbohrungen im beschriebenen Beispiel jeweils aus einem (einzigen) zylindrischen Bohrungsabschnitt und einem (einzigen) konischen Senkungsabschnitt bestehen, so kommen im Rahmen der Erfindung auch kompliziertere Formgestaltungen der Senkbohrungen in Betracht.

**Patentansprüche**

1. Nietvorrichtung zur Bewerkstelligung einer Mehrzahl von Nietungen entlang der Oberfläche eines Werkstückes (12), umfassend:

    - eine mittels Werkzeugsteuerdaten (ws) steuerbare Werkzeugeinrichtung (20) zur Ausbildung von Senkbohrungen (40) am Werkstück (12) und zum Setzen von Senkkopfnieten (30) in den ausgebildeten Senkbohrungen (40),
    - eine programmierbare Steuereinrichtung (ST) zur Erzeugung der Werkzeugsteuerdaten (ws) für die Werkzeugeinrichtung (20),
    - eine optische Erfassungseinrichtung (22-1) zur optischen Erfassung der Werkstückoberfläche und zur Bereitstellung von Erfassungsdaten (ed),

**dadurch gekennzeichnet, dass** die Steuereinrichtung (ST) dazu ausgebildet ist,
eine Auswertung der Erfassungsdaten (ed) vorzunehmen, um Geometriedaten zu gewinnen, die wenigstens einen Senkungsdurchmesser (D2) einer bereits ausgebildeten Senkbohrung (40) repräsentieren, und
in Abhängigkeit vom Ergebnis einer Auswertung der gewonnenen Geometriedaten unter Mitberücksichtigung eines Bohrungsdurchmessers (D1) der Senkbohrung (40) und eines Senkungswinkels ($\alpha$) der Senkbohrung (40) eine Korrektur der Werkzeugsteuerdaten (ws) für einer Senkungstiefe (T) für eine nachfolgend auszubildende Senkbohrung (40) vorzunehmen.

2. Nietvorrichtung nach Anspruch 1, wobei die optische Erfassungseinrichtung (22-1) eine Kamera zur Bereitstellung von Bilddaten ist.

3. Nietvorrichtung nach einem der vorangehenden Ansprüche, wobei zur Auswertung der Geometriedaten wenigstens ein darin enthaltener oder nachfolgend bei dieser Auswertung berechneter Ist-Geometrieparameter (T) mit einem entsprechenden vorgegebenen Soll-Geometrieparameter (T0) verglichen wird und die Korrektur der Werkzeugsteuerdaten (ws) basierend auf einem Vergleich des Ist-Geometrieparameters (T) mit dem Soll-Geometrieparameter (T0) vorgenommen wird.

4. Nietvorrichtung nach einem der vorangehenden Ansprüche, wobei die Korrektur der Werkzeugsteuerdaten (ws) als geschlossener Regelkreis (S1 bis S4) vorgesehen ist.

5. Verfahren zur Bewerkstelligung einer Mehrzahl von Nietungen entlang der Oberfläche eines Werkstückes (12), umfassend die Schritte:

    - Ausbilden von Senkbohrungen (40) am Werkstück (12) und Setzen von Senkkopfnieten (30) in den ausgebildeten Senkbohrungen (40), unter Verwendung einer mittels Werkzeugsteuerdaten (ws) gesteuerten Werkzeugeinrichtung (20),
    - programmgesteuertes Erzeugen der Werkzeugsteuerdaten (ws) für die Werkzeugeinrichtung (20) mittels einer programmierbaren Steuereinrichtung (ST),
    - optisches Erfassen der Werkstückoberfläche zur Bereitstellung von Erfassungsdaten (ed),

**dadurch gekennzeichnet, dass** das Verfahren ferner folgende mittels der Steuereinrichtung (ST) durchgeführte Schritte umfasst:

- Auswerten der Erfassungsdaten (ed), um Geometriedaten zu gewinnen, die wenigstens einen Senkungsdurchmesser (D2) einer bereits ausgebildeten Senkbohrung (40) repräsentieren,
- Auswerten der gewonnenen Geometriedaten, und
- Korrigieren der Werkzeugsteuerdaten (ws) für einer Senkungstiefe (T) für eine nachfolgend auszubildende Senkbohrung (40) in Abhängigkeit vom Ergebnis der Auswertung der Geometriedaten unter Mitberücksichtigung eines Bohrungsdurchmessers (D1) der Senkbohrung (40) und eines Senkungswinkels ($\alpha$) der Senkbohrung (40).

6. Verwendung einer Vorrichtung (10) nach einem der Ansprüche 1 bis 4 und/oder eines Verfahrens nach Anspruch 5 zur Bewerkstelligung einer Mehrzahl von Nietverbindungen (30) zwischen einem flächig ausgedehnten Bauteil (12) und einem an einer Flachseite des Bauteils (12) aufgesetzten langgestreckten Verstärkungselementes (14), insbesondere im Rahmen einer Herstellung einer verstärkten Rumpfschale eines Fahrzeuges, insbesondere Luftfahrzeuges.

**Claims**

1. Riveting device for applying a plurality of rivets along the surface of a workpiece (12), comprising:

- a tool device (20) which can be controlled by means of tool control data (ws) for providing counterbores (40) in the workpiece (12) and placing countersunk rivets (30) in the counterbores (40) so provided,
- a programmable control device (ST) for generating the tool control data (ws) for the tool device (20),
- an optical recording device (22-1) for the optical recording of the workpiece surface and to provide recording data (ed),

**characterised in that** the control device (ST) is provided for
making an analysis of the recording data (ed) to obtain geometric data to represent at least a countersink diameter (D2) of a counterbore (40) already made, and depending on the outcome of an analysis of the geometric data obtained while also taking account of a hole diameter (D1) of the counterbore (40) and a countersink angle ($\alpha$) of the counterbore (40), correcting the tool control data (ws) for a countersink depth (T) for a counterbore (40) that is to be made subsequently.

2. Riveting device according to claim 1, wherein the optical recording device (22-1) is a camera for providing image data.

3. Riveting device according to any one of the preceding claims, wherein for analysing the geometric data at least an actual geometric parameter (T) contained therein or subsequently calculated during this analysis is compared to a corresponding prescribed target geometric parameter (T0) and the correction of the tool control data (ws) is effected based on a comparison of the actual geometric parameter (T) with the target geometric parameter (T0).

4. Riveting device according to any one of the preceding claims, with the correcting of the tool control data (ws) being provided by means of a closed control loop (S1 to S4) .

5. Method of applying a plurality of rivets along the surface of a workpiece (12), comprising the steps:

- making counterbores (40) in the workpiece (12) and placing countersunk rivets (30) in the counterbores (40) by means of a tool device (20) controlled by means of tool control data (ws),
- program-controlled generation of tool control data (ws) for the tool device (20) by means of a programmable control device (ST),
- optical recording of workpiece surface for providing recording data (ed),

**characterised in that** the method further comprises the following steps to be implemented by means of the control device (ST):

- analysis of the recording data (ed) to obtain geometric data representing at least a countersink diameter (D2) of a counterbore (40) already made,
- analysis of the geometric data obtained, and
- correction of the tool control data (ws) for a countersink depth (T) for a counterbore (40) to be provided subsequently depending on the outcome of the analysis of the geometric data while also taking into account a hole diameter (D1) of the counterbore (40) and a countersink angle ($\alpha$) of the counterbore (40).

6. Use of a device (10) according to any one of claims 1 to 4 and/or of a method according to claim 5 for making a plurality of riveted connections (30) between a flat component (12) and an elongated reinforcement element (14) mounted on a flat face of the component (12), particularly in the context of the production of a reinforced hull or fuselage shell of a vehicle, in particular an aircraft.

**Revendications**

1. Dispositif de rivetage permettant de réaliser une pluralité de rivetages le long de la surface d'une pièce (12), comprenant :

    - un moyen formant outil (20), qui peut être commandé au moyen de données de commande d'outil (ws), destiné à former des trous à fraisure (40) sur la pièce (12) et à poser des rivets à tête fraisée (30) dans les trous à fraisure (40) formés,
    - un moyen de commande programmable (ST) destiné à générer les données de commande d'outil (ws) pour le moyen formant outil (20),
    - un moyen d'acquisition optique (22-1) destiné à l'acquisition optique de la surface de la pièce et à la mise à disposition de données d'acquisition (ed),

    **caractérisé en ce que** le moyen de commande (ST) est conçu pour

    effectuer une évaluation des données d'acquisition (ed), pour obtenir des données géométriques qui représentent au moins un diamètre de fraisure (D2) d'un trou à fraisure (40) déjà formé, et

    effectuer une correction des données de commande d'outil (ws) pour une profondeur de fraisure (T) pour un trou à fraisure (40) à réaliser subséquemment en fonction du résultat d'une évaluation des données géométriques obtenues, en prenant également en compte un diamètre d'alésage (D1) du trou à fraisure (40) et un angle de fraisure ($\alpha$) du trou à fraisure (40).

2. Dispositif de rivetage selon la revendication 1, dans lequel le moyen d'acquisition optique (22-1) est une caméra destinée à mettre à disposition des données d'image.

3. Dispositif de rivetage selon l'une des revendications précédentes, dans lequel, pour l'évaluation des données géométriques, au moins un paramètre géométrique réel (T), inclus dans celles-ci ou calculé subséquemment lors de cette évaluation, est comparé avec un paramètre géométrique théorique (T0) prédéfini correspondant et la correction des données de commande d'outil (ws) est effectuée sur la base d'une comparaison du paramètre géométrique réel (T) avec le paramètre géométrique théorique (T0).

4. Dispositif de rivetage selon l'une des revendications précédentes, dans lequel la correction des données de commande d'outil (ws) est prévue sous la forme d'une boucle de régulation fermée (S1 à S4).

5. Procédé permettant de réaliser une pluralité de rivetages le long de la surface d'une pièce (12), comprenant les étapes :

    - formation de trous à fraisure (40) sur la pièce (12) et pose de rivets à tête fraisée (30) dans les trous à fraisure (40) formés, en utilisant un moyen formant outil (20) commandé au moyen de données de commande d'outil (ws),
    - génération commandée par programme des données de commande d'outil (ws) pour le moyen formant outil (20) au moyen d'un moyen de commande programmable (ST),
    - acquisition optique de la surface de la pièce pour la mise à disposition de données d'acquisition (ed),

    **caractérisé en ce que** le procédé comprend en outre les étapes suivantes exécutées à l'aide du moyen de commande (ST) :

    - évaluation des données d'acquisition (ed), pour obtenir des données géométriques qui représentent au moins un diamètre de fraisure (D2) d'un trou à fraisure (40) déjà formé,
    - évaluation des données géométriques obtenues, et
    - correction des données de commande d'outil (ws) pour une profondeur de fraisure (T) pour un trou à fraisure (40) à réaliser subséquemment en fonction du résultat de l'évaluation des données géométriques en prenant également en compte un diamètre d'alésage (D1) du trou à fraisure (40) et un angle de fraisure ($\alpha$) du trou à fraisure (40).

6. Utilisation d'un dispositif (10) selon l'une des revendications 1 à 4 et/ou d'un procédé selon la revendication 5 pour réaliser une pluralité d'assemblages rivetés (30) entre un composant (12) qui s'étend de manière plane et un élément de renforcement (14) allongé, placé sur un côté plat du composant (12), en particulier dans le cadre de la fabrication d'une coque de fuselage renforcée d'un véhicule, en particulier d'un aéronef.

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3535761 C1
- DE 19834702 A1